# EUROPEAN PATENT APPLICATION

(11) **EP 1 632 674 A2**
(43) Date of publication of application: **08.03.2006**
(21) Application number: 05017538.9
(22) Date of filing: 11.08.2005
(51) Int. Cl.: F02M 25/07

(54) **"Valve actuating mechanism"**

(30) Priority: 27.08.2004 GB 0419060
(71) Applicant: Delphi Technologies, Inc., Troy, MI 48007 (US)
(72) Inventor: Simion, Hugues, 54430 Heumont (FR)
(74) Representative: Jones, Keith William

(57) **Abstract**

The invention proposes an eccentric drive mechanism for actuating a valve with a valve shaft where the eccentric drive mechanism (14) comprises a guiding element, such as a slotted cam plate 20, with a guide recess, such as an eccentric slot (22), wherein a contact element (28) attached to the valve shaft (18) is guided in said guide recess.

## Description

The present invention relates to a valve actuating mechanism comprising an eccentric drive mechanism for actuating a valve with a valve shaft.

A valve actuating mechanism with an eccentric drive mechanism is disclosed in EP 0 856 657. The disadvantage of this known arrangement is that the stop provided at the end of the actuation member of the valve may, in certain circumstances, lose contact with the cam and its eccentric surface.

It is an object of the present invention to provide a further embodiment of a valve actuating mechanism and more particularly to overcome the above mentioned problem.

This is achieved by means of the valve actuating mechanism as defined in claim 1. The valve actuating mechanism of the above type, according to the invention, is characterised in that the eccentric drive mechanism comprises a guiding element, such as a slotted cam plate, with a guide recess, such as an eccentric slot, wherein a contact element attached to the valve shaft is guided in said guide recess/said eccentric slot.

In order to allow the valve actuating mechanism to exert an axial force on the valve shaft the cam plate is rotatably mounted to a drive shaft. Thus, the eccentric drive mechanism connects the drive shaft to the valve shaft.

Advantageously, the eccentric slot comprises two opposed curved contact surfaces - first and second contact track or inner and outer contact track respectively - wherein the contact element of the valve shaft is engaged with said first contact track. Thus, the first contact track functions as a cam with an eccentric surface. The second contact track functions as a stop for limiting axial movement of the drive shaft. Accordingly, the eccentric slot, in any angular position of the cam plate, provides safe guidance for the axial movement of the drive shaft and ensures that the angular position of the cam plate is directly transferred into a corresponding axial disposition of the drive shaft without allowing the drive shaft to deviate from the axial position predetermined by the angular position of the cam plate. In this regard the second or outer contact track functions as a limitation for axial movement of the valve shaft.

Beneficially, the contact element is a rolling element, preferably a roller-bearing.

Further beneficially, an angular spring engages the cam plate and exerts a spring torque on the cam plate to push said first or inner contact track into engagement with the contact element or the rolling element/the roller-bearing.

Preferably, the angular spring is engaged with the cam plate in order to support closure of the valve, moving a valve head into engagement of a corresponding valve seat. Further preferably, the valve comprises no linear spring for exerting a linear force on the valve shaft. Thus, the only forces exerted on the valve shaft are the spring force of the angular spring by means of the eccentric drive mechanism described above and a reverse force exerted on the valve shaft, more specifically on the valve head at the end of the valve shaft, by the motor, i.e. by the pressure developed in the relevant combustion chamber.

According to an alternate embodiment, the valve comprises a linear spring provided to engage the valve shaft for exerting a linear force on the contact element. With this embodiment the angular spring is provided for supporting the opening of the valve, i.e. for disengaging the valve head from the valve seat, by ensuring permanent contact between the contact element and the first or inner contact track while the spring force of the linear spring exerts a linear force on the valve shaft and the contact element which is opposed to the forces exerted by the motor, i.e. the pressure in the relevant combustion chamber, and the spring force of the angular spring. With this embodiment the spring force of the angular spring preferably is smaller than the spring force of the linear spring.

The essential advantages of the invention are that unintended axial displacement of the valve shaft is prohibited.

Other features and advantages of the present invention would appear from the following description of a preferred embodiment of the invention, given as a non-limiting example, illustrated in the drawings. All the elements which are not required for the immediate understanding of the invention are omitted. In the drawings, the same elements are provided with the same reference numerals in the various figures, in which
- Fig. 1: is a side view, partly in cross-section, of a valve actuating mechanism in accordance with the present invention and
- Fig. 2: is a side view, partly in cross-section also, of an alternative embodiment of a valve actuating mechanism in further accord with the present invention.

In the following description, for purposes of explanation and not limitation, specific details are set forth, such as particular embodiments, techniques, etc. in order to provide a thorough understanding of the present invention. However, it will be apparent to one skilled in the art that the present invention may be practised in other embodiments that depart from these specific details. For example, while the present invention is sometimes described in the context of valve devices used in exhaust gas recirculation, those skilled in the art will appreciate that the present invention can be implemented in any valve device.

In other instances, detailed descriptions of well-known elements and devices are omitted so as not to obscure the description of the present invention with unnecessary detail.

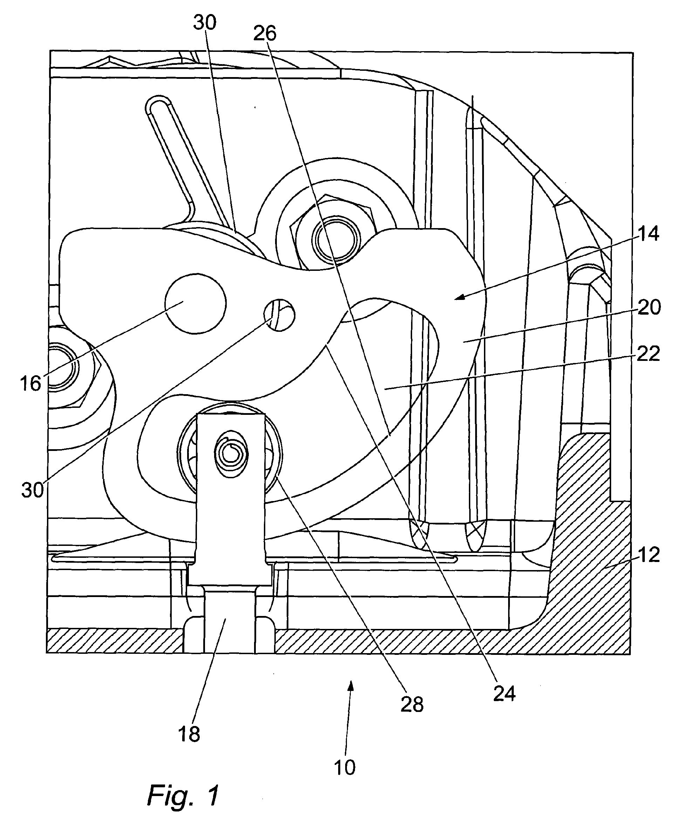

Fig. 1, which is a side-view, partly in cross-section, of a valve actuating mechanism 10 in accordance with the present invention shows a valve housing 12 with an eccentric drive mechanism 14 disposed therein. The valve actuating mechanism 10, more specifically an eccentric drive mechanism 14, includes drive means (not shown), such as an electric motor, which has a drive shaft 16. Actuation of the drive means causes the drive shaft 16 to rotate about its longitudinal axis. The valve actuating mechanism 10 also includes a valve shaft 18 which is attached to a valve head (not shown) which engages with a valve seat (not shown). The valve shaft 18 is capable of reciprocating linear/axial movement along its longitudinal axis to move the valve head into and out of engagement with the valve seat. The eccentric drive mechanism 14 connects the drive shaft 16 to the valve shaft 18.

The eccentric drive mechanism 14 includes a cam plate 20 as an example of a guide element having an eccentric slot 22 formed therein functioning as a guide recess. The eccentric slot 22 defines opposed contact tracks 24, 26. The cam plate 20 is secured to the valve shaft 16. A contact element 28, preferably a rolling element or even more preferably a roller-bearing, is positioned/guided in the eccentric slot 22 and is secured to the valve shaft 18.

The contact element 28 is positioned between the contact tracks 24, 26 and engages one of the contact tracks 24, 26. The radial width of the slot 22 in the cam plate 20 is proportioned in that the contact element 28 tightly fits into the eccentric slot 22. The contact element 28, specifically when embodied as a rolling element or a roller-bearing, is capable of sliding or rolling in the slot 22.

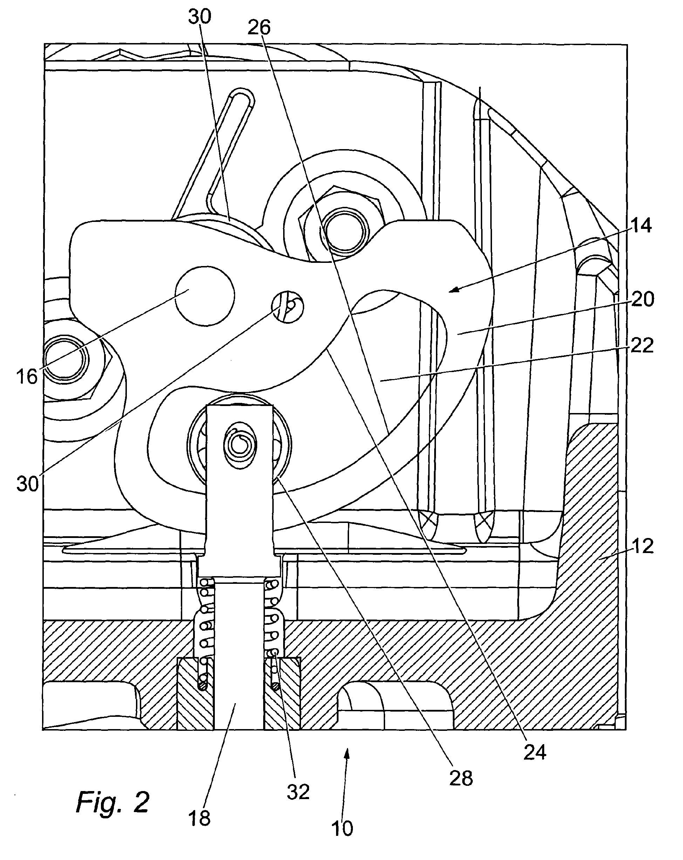

An angular spring 30 engages the cam plate 20 to exert a spring torque on the cam plate 20 to push one contact track 24, 26, depending on the direction of the force of the angular spring 30, into engagement with the contact element 28. In the embodiment shown in Fig. 1, the spring force of the angular spring 30 is directed in order to exert a force which supports closing of the valve, i.e. upward movement of the valve shaft 18 in order to engage the valve head with the corresponding valve seat, and thus provides for a contact of at least the second or outer contact track 26 with the contact element 28. (In the drawing in Fig. 1 the spring force of the angular spring 30 acts in counter-clockwise direction.) In the alternate embodiment of Fig. 2 the spring force of the angular spring 30 is directed in order to support opening of the valve and thus supporting downward movement of the valve shaft, disengaging valve head and valve seat, and therefore providing an engagement of at least the first or inner contact track 24 with the contact element 28. (In the drawing in Fig. 2 the spring force of the angular spring 30 acts in clockwise direction.)

In the embodiment of Fig. 2 the valve actuating mechanism further comprises a linear (coil) spring 32 which engages the valve shaft 18 and exerts a linear force on the contact element 28 to push the contact element 28 into engagement with the first or inner contact track 24. In effect, the linear spring 32 and the angular spring 30 act against one another and the linear spring 32 forces closure of the valve.

However, irrespective of the actuator torque provided by the drive means, or any external force applied to the valve head, the contact element 28 always remains in contact with at least one of said contact tracks 24, 26. The linear spring 32 is preferably stronger than the angular spring 30.

The present invention overcomes the problem of the contact element 28 bouncing between the opposed contact tracks 24, 26. This provides a better and more accurate control of the valve shaft 18 movement and prevents unintentional disposition of the contact element 28. More specifically in the embodiment in Fig. 2 with the two springs 30, 32 both springs acting against one another prevents the contact element from striking the contact tracks 24, 26.

When the second contact track 26 has been described as functioning as a limitation for axial movement of the valve shaft 18 it has to be understood that in the first embodiment in Fig. 1 the second contact track 26 allows to close the valve while the same contact track 26 in the second embodiment in Fig. 2 is used when friction of the shaft 18 cannot be compensated by the linear spring 32. Then the contact element 28 (rolling element 28) disengages from the first or inner contact track 24 and engages the second or outer contact track 26.

Although a preferred embodiment of the invention has been illustrated and described herein, it is recognized that changes and variations may be made without departing from the invention as set forth in the claims. Specifically, the present invention has particular use in an exhaust gas recirculation (EGR) valve for controlling the flow of exhaust gas into the air intake of an internal combustion engine. Furthermore, while the particular valve actuating mechanism as herein shown and described in detail is fully capable of attaining the above-described objects of the invention, it is to be understood that it is the presently preferred embodiment of the invention and thus is representative of the subject matter which is broadly contemplated by the present invention. However, the scope of the present invention fully encompasses other embodiments which may become obvious to those skilled in the art. Accordingly, the scope of the present invention is to be limited by nothing other than the appended claims, in which, for example, reference to an element in the singular is not intended to mean "one and only one" unless explicitly so stated, but rather "one or more". All structural and functional equivalents to the elements of the above-described preferred embodiment that are known or later come to be known to those of ordinary skill in the art are expressly incorporated herein by reference and are intended to be encompassed by the present claims. Moreover, it is not necessary for a device or method to address each and every problem sought to be solved by the present invention, in order to be regarded as being encompassed by the present claims.

Summarising the invention described above it can shortly be described as proposing an eccentric drive mechanism for actuating a valve with a valve shaft where the eccentric drive mechanism 14 comprises a guiding element, such as a slotted cam plate 20, with a guide recess, such as an eccentric slot 22, wherein a contact element 28 attached to the valve shaft 18 is guided in said guide recess.

### List of reference numerals

- 10: valve actuating mechanism
- 12: valve housing
- 14: eccentric drive mechanism
- 16: drive shaft
- 18: valve shaft
- 20: cam plate
- 22: eccentric slot
- 24: contact track
- 26: contact track
- 28: contact element
- 30: angular spring
- 32: linear (coil) spring

## Claims

1. Valve actuating mechanism comprising an eccentric drive mechanism (14) for actuating a valve (10) with a valve shaft (18),
**characterised in that**
said eccentric drive mechanism (14) comprises a guiding element, such as a slotted cam plate 20, with a guide recess, such as an eccentric slot (22), wherein a contact element (28) attached to the valve shaft (18) is guided in said guide recess.

2. The valve of claim 1,
wherein the cam plate (20) is rotatably mounted to a drive shaft (16).

3. The valve of claim 1,
wherein the eccentric slot (22) comprises two opposed curved contact surfaces (24, 26) - first and second contact track (24, 26) - and
wherein the contact element (28) of the valve shaft (18) is engaged with one of said contact tracks (24, 26).

4. The valve of claim 3,
wherein the second contact track (26) functions as a limitation for axial movement of the valve shaft (18).

5. The valve of any one of the preceding claims,
wherein the contact element (28) is a rolling element, preferably a roller bearing.

6. The valve of any one of the preceding claims,
wherein an angular spring (30) engages the cam plate (20).

7. The valve of claim 6,
wherein the angular spring (30) is engaged with the cam plate (20) in order to support closure of the valve (10).

8. The valve of claim 7,
comprising no linear spring for exerting a linear force on the valve shaft (18).

9. The valve of any one of claims 1 to 6,
wherein a linear spring (32) engages the valve shaft (18) and is provided for exerting a linear force on the contact element (28).

10. The valve of claim 9,
wherein the angular spring (30) is provided for supporting the contact between the contact element (28) and the first contact track (24).
